# EUROPÄISCHE PATENTSCHRIFT

(11) **EP 0 877 686 B1**
(45) Veröffentlichungstag und Bekanntmachung des Hinweises auf die Patenterteilung: **20.08.2003**
(21) Anmeldenummer: 96945751.4
(22) Anmeldetag: 27.11.1996
(51) Int. Cl.: B60T 8/36, B60T 13/68

(54) **ELEKTROMAGNETISCH BETÄTIGTES VENTIL, INSBESONDERE FÜR HYDRAULISCHE BREMSANLAGEN VON KRAFTFAHRZEUGEN**
ELECTROMAGNETICALLY ACTUATED VALVE, ESPECIALLY FOR HYDRAULIC MOTOR VEHICLE BRAKING SYSTEMS
SOUPAPE ACTIONNEE PAR VOIE ELECTROMAGNETIQUE, NOTAMMENT POUR SYSTEMES DE FREINAGE HYDRAULIQUES DE VEHICULES A MOTEUR

(30) Priorität: 07.02.1996 DE 19604317
(43) Veröffentlichungstag der Anmeldung: 18.11.1998
(73) Patentinhaber: ROBERT BOSCH GMBH, 70442 Stuttgart (DE)
(72) Erfinder: HOHL, Günther, D-70569 Stuttgart (DE); MITTWOLLEN, Norbert, D-71706 Markgröningen (DE); SOMMER, Dietmar, D-71254 Ditzingen (DE)
(86) Internationale Anmeldenummer: DE9602270
(87) Internationale Veröffentlichungsnummer: WO97028999

(56) Entgegenhaltungen:
- EP-A- 0 199 959
- DE-A- 3 502 276
- DE-A- 3 729 183
- DE-A- 4 119 662
- DE-A- 4 412 648
- DE-A- 4 438 721

## Beschreibung

Die Erfindung geht aus von einem elektromagnetisch betätigten Ventil nach der Gattung des Patentanspruchs 1.

Es ist schon ein solches Ventil bekannt (DE 44 12 648 A1), dessen Sitzventil unter der Wirkung einer Rückstellfeder seine Offenstellung einnimmt und magnetbetätigt in seine den Durchfluß von Druckmittel sperrende Stellung schaltbar ist. Das bekannte Ventil ist also von seiner Bauart her ein Schaltventil in der Form des kostengünstigen 2/2-Wegeventils. Darüberhinaus ist durch konstruktive Maßnahmen an Schließglied und Stößel erreicht, daß sich bei ausreichend großem Druckgefälle aus der Schließstellung des Sitzventils heraus aufgrund von hydraulischen Kräften selbsttätig eine teilgeschlossene Stellung einstellt, in welcher der Volumenstrom gemindert ist. Das bekannte Ventil ist daher vorteilhaft beispielsweise in schlupfgeregelten hydraulischen Bremsanlagen einsetzbar, um bei Druckaufbau z. B. einer Bremsschlupfregelung ein günstiges Verhalten hinsichtlich der Regelgüte und der Geräuschemission zu erzielen.

### Vorteile der Erfindung

Das erfindungsgemäße Ventil mit den kennzeichnenden Merkmalen hat demgegenüber den Vorteil, daß sich dieses, ähnlich einem Proportionalventil, durch Steuerung der Magnetkraft bei kleinen Hüben in beliebig viele Zwischenstellungen überführen läßt, ohne jedoch den aufwendigen Aufbau eines Proportionalventiles aufzuweisen. Diese Wirkungsweise ist darauf zurückzuführen, daß die Rückstellfeder im wesentlichen den Verlauf der am Stößel angreifenden Kraft über den Ventilhub bestimmt, während die am Schließglied wirkende hydraulische Kraft aufgrund der geometrischen Verhältnisse von Zuströmbohrung und Ventilsitz nur einen untergeordneten Einfluß hat. Mit dem erfindungsgemäßen Ventil ist daher eine weitgehend kontinuierliche Durchflußsteuerung erzielbar. Es kann in vielen Anwendungsfällen anstelle von Proportionalventilen eingesetzt werden. Bei schlupfgeregelten Bremsanlagen ist durch die Anwendung des erfindungsgemäßen Ventils eine höhere Regelgüte und eine geringere Geräuschemission als bei dem bekannten Ventil zu erzielen.

Durch die in den Unteransprüchen aufgeführten Maßnahmen sind vorteilhafte Weiterbildungen und Verbesserungen des im Patentanspruch 1 angegebenen Ventils möglich.

Mit den in den Ansprüchen 2 und 3 gekennzeichneten Ausgestaltungen wird nach dem Öffnen des Ventils eine definierte Ablösung des Druckmittelstrahls vom Schließglied bzw. vom Ventilsitz erreicht. Instabile Strömungskräfte werden somit weitgehend vermieden.

Die im Anspruch 4 angegebene Weiterbildung der Erfindung hat den Vorteil, daß ein von Schließglied und Ventilsitz abgelöster Druckmittelstrahl im weiteren Verlauf nicht mehr auf den Stößel trifft. Störende Einflüsse durch Strömungskräfte werden hierdurch ausgeschaltet.

Mit der im Anspruch 5 gekennzeichneten Ausgestaltung der Erfindung ist es auf einfache Weise möglich, die Federkraft der Rückstellfeder beispielsweise in der Schließstellung des Sitzventils durch Einstellen der Position der Hülse relativ zum Stößel zu justieren.

### Zeichnung

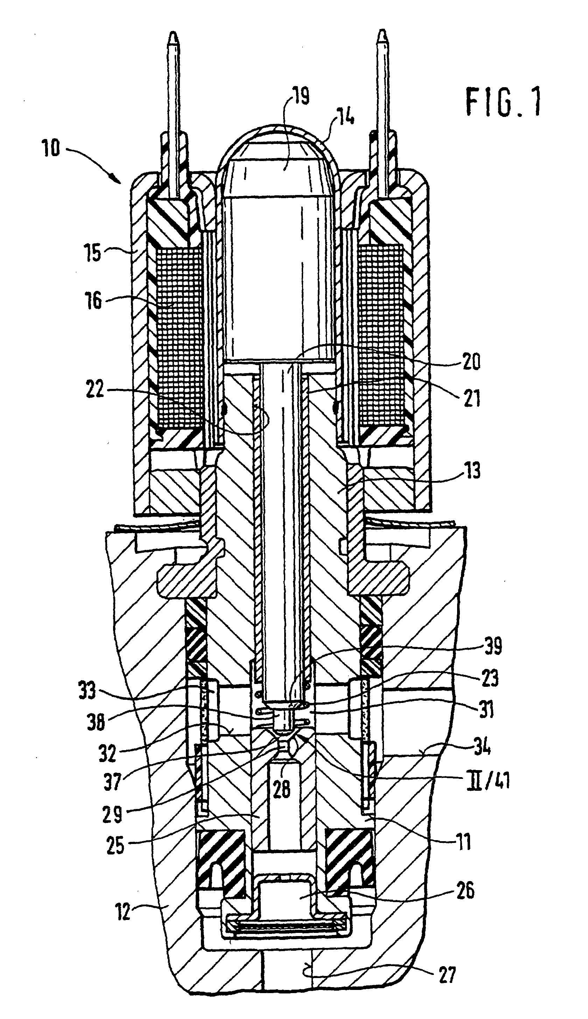

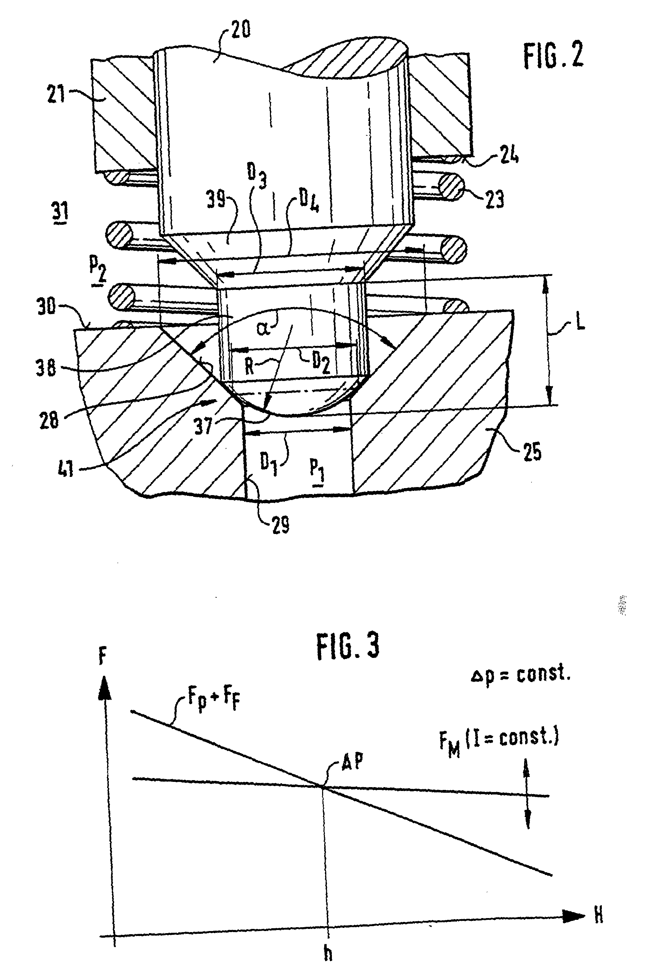

Ein Ausführungsbeispiel der Erfindung ist in der Zeichnung vereinfacht dargestellt und in der nachfolgenden Beschreibung näher erläutert. Es zeigen Figur 1 einen Längsschnitt eines elektromagnetisch betätigten Ventils mit einem Sitzventil, Figur 2 als Einzelheit II aus Figur 1 das in Schließstellung befindliche Sitzventil in gegenüber Figur 1 vergrößertem Maßstab und Figur 3 ein Diagramm der im Sitzventil über den Ventilöffnungshub wirkenden Kräfte.

### Beschreibung des Ausführungsbeispiels

Ein in Figur 1 der Zeichnung dargestelltes elektromagnetisch betätigtes Ventil 10 hat ein Ventilgehäuse 11, mit dem es in einem Ventilblock 12 aufgenommen ist. Außerhalb des Ventilblocks 12 ist das Ventilgehäuse 11 in einem Polkern 13 fortgesetzt. Auf dem Polkern 13 ist ein hülsenförmiger Ventildom 14 druckdicht befestigt. Auf diesen sowie den Polkern 13 ist eine von einem magnetflußleitenden Gehäuse 15 umhüllte, ringförmige Magnetspule 16 aufgesteckt.

Im Ventildom 14 befindet sich ein längsbewegbarer Magnetanker 19. Dieser greift an einem Stößel 20 an, auf den eine Hülse 21 aufgepreßt ist. Der Stößel 20 und die Hülse 21 sind in einer Längsbohrung 22 von Polkern 13 und Ventilgehäuse 11 längsbewegbar aufgenommen. Eine Rückstellfeder 23 greift ankerabgewandt an einer stirnseitigen Stützfläche 24 der Hülse 21 an (Figur 2).

Die Rückstellfeder 23 ist an einem in das Ventilgehäuse 11 eingepreßten, längsdurchbohrten Ventilkörper 25 abgestützt. Dieser steht mit einem Druckmitteleinlaß 26 des Ventils 10 in Verbindung, welcher mit einer Leitungsbohrung 27 des Ventilblocks 12 kommuniziert.

Der Ventilkörper 25 weist stößelseitig einen hohlkegelförmigen Ventilsitz 28 mit einem Kegelwinkel α von höchstens 90° auf (Figur 2). In den Ventilsitz 28 mündet zentrisch eine mit dem Druckmitteleinlaß 26 in Verbindung stehende Zuströmbohrung 29 mit dem Durchmesser D₁. Der Ventilsitz 28 endet radial außen scharfkantig an einer Stirnfläche 30, welche den Ventilkörper 25 gegen eine Ventilkammer 31 begrenzt und rechtwinklig zu einer Achse verläuft, in welcher der Ventilkörper 25, der Ventilsitz 28, der Stößel 20 mit Hülse 21 und der Magnetanker 19 liegen. Die Ventilkammer 31 steht mit einer Querbohrung 32 in Verbindung, welche den Druckmittelauslaß 33 des Ventils 10 bildet und mit einer Leitungsbohrung 34 des Ventilblocks 12 kommuniziert. Die Längsbohrung 22 und der Ventildom 14 stehen mit der Ventilkammer 31 in druckmittelleitender Verbindung .Der Magnetanker 19 und der Stößel 20 mit Hülse 21 sind daher druckmittelumspült.

Mit dem Ventilsitz 28 wirkt ein Schließglied 37 in der Form eines Kugelsegments zusammen. Das Schließglied 37 ist stirnseitig an einem im Durchmesser verringerten zylindrischen Abschnitt 38 des Stößels 20 in der Ventilkammer 31 ausgebildet. Der Kegelwinkel α des Ventilsitzes 28 und der Radius R des Schließglieds 37 sind derart aufeinander abgestimmt, daß der Dichtdurchmesser D₂ des Ventilsitzes dem Durchmesser D₁ der Zuströmbohrung 29 entspricht oder geringfügig größer ist. Der Durchmesser D₃ des Stößelabschnitts 38 entspricht demgegenüber wenigstens annähernd dem Dichtdurchmesser D₂ des Ventilsitzes 28, d. h. der Stößelabschnitt 38 ist geringfügig größer als der Dichtdurchmesser. Der Übergang des Schließgliedes 37 zum Stößelabschnitt 38 ist scharfkantig ausgebildet. Der Stößelabschnitt 38 hat einschließlich des Schließgliedes 37 eine axiale Länge L, welche wenigstens dem Dichtdurchmesser D₂ des Ventilsitzes 28 entspricht. Der Stößelabschnitt 38 geht nach einem Übergangsabschnitt 39 mit dem Ventilsitz 28 entsprechender Konizität in den Stößel 20 über. Außerdem ist in Figur 2 zu erkennen, daß der Auslauf des Ventilsitzes 28 in der Stirnfläche 30 einen Durchmesser D₄ hat, der wenigstens dem Zweifachen des Dichtdurchmessers D₂ des Ventilsitzes entspricht.

Der Ventilsitz 28 des Ventilkörpers 25 und das Schließglied 37 des Stößels 20 bilden ein Sitzventil 41, welches aufgrund der Wirkung der Rückstellfeder 23 bei fehlender Bestromung der Magnetspule 16 seine Durchlaßstellung einnimmt. Bestromt ist das Ventil 10 in die Schließstellung des Sitzventils 41 umschaltbar. Das elektromagnetisch betätigte Ventil 10 ist somit ein Schaltventil in der Form des 2/2-Wegeventils. Es ist in hydraulischen Bremsanlagen von Kraftfahrzeugen verwendbar, wie sie in der eingangs erwähnten Druckschrift DE 44 12 648 A1 angedeutet und in der Druckschrift DE 41 19 662 A1 hinsichtlich Schaltbild und Funktion ausführlich beschrieben sind. Bei einer solchen Verwendung ist der Druckmitteleinlaß 26 des Ventils 10 mit einem Hauptbremszylinder als Druckerzeuger der Bremsanlage und der Druckmittelauslaß 33 mit einer Radbremse als Druckverbraucher verbunden.

Herkömmliche Schaltventile unterscheiden sich vom erfindungsgemäßen Ventil beispielsweise dadurch, daß beim Sitzventil Kegelwinkel α größer als 90° gewählt werden, um als Schließglied 37 Kugeln größeren Durchmessers verwenden zu können, weil diese bei der Montage am Stößel 20 leichter handhabbar sind. Ferner strebt man beim herkömmlichen Sitzventil an, den Übergang zwischen der Kugelfläche des Schließglieds 37 und dem Stößel 20 kantenfrei zu gestalten. Schließlich ist der Magnetanker beim herkömmlichen Ventil derart ausgelegt, daß die Magnetkraft beim Übergang in die Schließstellung zunehmend steiler ansteigt.

Das erfindungsgemäße Ventil 10 zeichnet sich demgegenüber in folgender Weise aus:

In der Schließstellung (Fig. 2) des Sitzventils 41 wirkt der zuströmseitige Druck p₁ auf eine vom Dichtdurchmesser D2 umschriebene Wirkfläche des Stößelabschnitts 38 und übt eine öffnende Kraft auf den Stößel 20 aus. Der in der Ventilkammer 31 und im Ventildom 14 herrschende, abströmseitige Druck p₂ ist niedriger als der Druck p₁ und wirkt mit einer Kraft schließend auf den Stößel 20. Die aus diesen beiden Kräften resultierende hydraulische Kraft Fₚ wirkt somit auf den Stößel 20 öffnend. Mit einer Kraft FF öffnend auf den Stößel 20 wirkt auch die als Schraubendruckfeder ausgebildete Rückstellfeder 23.

Beim Öffnen des Ventils 41 aus seiner Schließstellung heraus dringt das niedrigere Druckniveau p₂ in geringem Maße in Richtung auf die Zuströmbohrung 29 vor. Da diese aber nahezu dem Dichtdurchmesser D₂ des Ventilsitzes 28 entspricht, kommt es nicht zu einer wesentlichen Verringerung der von dem Druck p₁ auf die Wirkfläche des Stößelabschnitts 38 ausgeübten öffnenden Kraft. Unter der Voraussetzung einer konstanten Druckdifferenz zwischen p₁ und p₂ nimmt daher die resultierende hydraulische Kraft Fp über den zunehmenden Ventilöffnungshub H nur mit betragsmäßig geringer negativer Steigung monoton fallend ab. Für die Kräftebilanz am Stößel 20 kommt demgegenüber der Rückstellfeder 23 eine wesentliche Bedeutung dadurch zu, daß diese eine relativ hohe Federsteifigkeit besitzt und demzufolge die Federkraft F_{F} mit zunehmendem Ventilöffnungshub H mit betragsmäßig großer negativer Steigung monoton abfällt. Beim Schließen des Sitzventils 41 kehren sich die Verhältnisse entsprechend um.

Der Verlauf der additiv miteinander verknüpften Kräfte Fp + F_{F} über den Ventilöffnungshub H ist in Figur 3 in einem Diagramm angegeben, in welchem der Abszisse der Hub H und der Ordinate die Kraft F zugeordnet sind. Die Kennlinie dieser Summenkraft hat eine betragsmäßig relativ große negative Steigung. Da dies im wesentlichen von der Charakteristik der Rückstellfeder 23 abhängt und weniger von der Änderung der hydraulischen Kraft Fp über den Ventilöffnungshub H, ist es für die erfindungsgemäße Funktion des Ventils 10 erforderlich, die Federkraft sehr genau einzustellen. Dies kann dadurch geschehen, daß bei am Ventilsitz 28 angreifendem Stößelabschnitt 38 die Hülse 21 relativ zum Stößel 20 verschoben wird, bis die beim Hub 0 des Sitzventils 41 erforderliche Größe der Federkraft erreicht ist. Aufgrund der Preßverbindung zwischen dem Stößel 20 und der Hülse 21 ist diese Einstellung dauerhaft vorgenommen.

Die Formgebung des Sitzventils 41 stellt sicher, daß der im Diagramm wiedergegebene Kennlinienverlauf Fₚ + F_{F} weitgehend frei von Störeinflüssen ist. So wird durch den relativ kleinen Kegelwinkel α des Ventilsitzes 28 eine geringe Umlenkung der Druckmittelstrahlen im Sitzventil 41 erreicht. Dadurch werden wenig Impulskräfte hervorgerufen, die insbesondere bei großen Durchflüssen auftreten. Die Abhängigkeit der Ventileigenschaften von Differenzdruck und Temperatur des Druckmittels ist daher gering. Ferner ist durch den scharfkantigen Übergang zwischen dem Schließglied 37 und dem Stößelabschnitt 38 sichergestellt, daß die Druckmittelströmung stets dort abreißt und somit zu gleichmäßigen Strömungskräften auf das Schließglied 37 führt. Zu einer stabilen Druckmittelströmung trägt auch der scharfkantige Auslauf des Ventilsitzes 28 an der Stirnfläche 30 des Ventilkörpers 25 bei. Die Wirkung der Druckmittelströmung auf die Windungen der Rückstellfeder 23 ist daher weitgehend frei von störenden Einflüssen. Ferner schließt der axial zurückgesetzte Übergangsabschnitt 39 ein Auftreffen von Druckmittelstrahlen auf den Stößel 20 weitgehend aus.

Der erwähnten hydraulischen Kraft Fₚ und der Federkraft F_{F} ist die durch Erregen der Magnetspule 16 erzeugte, in Schließrichtung des Sitzventils 41 wirkende Magnetkraft F_{M} entgegengerichtet. Die Magnetkraft F_{M} muß wenigstens eine Größe erreichen, um das Sitzventil 41 entgegen der hydraulischen Kraft Fₚ und der Federkraft F_{F} in die Schließstellung zu überführen und in dieser zu halten. Wie die Kennlinie der Magnetkraft F_{M} im Diagramm nach Figur 3 zeigt, ist durch dem Fachmann geläufige Maßnahmen bei der Gestaltung des Magnetkreises erreicht, daß bei einem bestimmten Erregerstrom I = konstant die Magnetkraft F_{M} über dem Ventilöffnungshub H ebenfalls einen monoton fallenden Verlauf nimmt, jedoch mit betragsmäßig geringerer negativer Steigung als ihn der Kraftverlauf Fₚ + F_{F} aufweist. Die flache Neigung der Kennlinie F_{M} ist beispielsweise durch entsprechende Ausbildung des Magnetkreises erzielbar, insbesondere wenn in der Schließstellung des Ventils 10 ein relativ großer Restluftspalt zwischen dem Magnetanker 19 und dem Polkern 13 verbleibt oder der Magnetanker und der Polkern als Tauchstufe ausgebildet sind. Die dargestellte Magnetkraft-Kennlinie ist für einen bestimmten Erregerstrom I = konstant repräsentativ. Durch abweichende Erregerströme sind in Richtung der Ordinate verlagerte Kennlinien erzeugbar. Geänderte Erregerströme sind durch Stromsteuerung, Pulsweitenmodulation und andere bekannte Verfahren einstellbar.

Die beiden Kennlinien Fₚ + F_{F} sowie F_{M} schneiden sich im Diagramm in einem Punkt, in dem Gleichgewicht zwischen der öffnenden hydraulischen Kraft Fp sowie der Federkraft F_{F} einerseits und der schließenden Magnetkraft F_{M} andererseits herrscht. Dieser Punkt ist als Arbeitspunkt AP bezeichnet, in dem das Sitzventil 41 beim Hub h eine stabile Stellung einnimmt. Eine in Richtung des Doppelpfeils im Diagramm durch Stromsteuerung verlagerte Magnetkraft-Kennlinie legt den Arbeitspunkt auf einen anderen Ventilöffnungshub. Das erfindungsgemäße Ventil 10 ist daher trotz seiner Bauform als Schaltventil ähnlich einem Proportionalventil stromabhängig mit variablem Öffnungshub stufenlos steuerbar. Diese Steuerbarkeit ist zumindest bei kleinen Ventilöffnungshüben gegeben.

Das erfindungsgemäße Ventil 10 ist in hydraulischen Bremsanlagen von Kraftfahrzeugen verwendbar, beispielsweise zur Bremsschlupf- oder Antriebsschlupfregelung oder in Bremsanlagen mit einer hydraulischen Servodruckquelle zur direkten Einsteuerung von Bremsdruck in Radbremszylinder. Mit dem Ventil 10 ist in vorteilhafter Weise eine stufenlose Druckund Volumenstromregelung möglich, wenn die Bremsanlage mit entsprechenden Sensoren und einer Regelelektronik ausgestattet ist. Auch ist das Ventil 10 als Druckbegrenzungsventil verwendbar, indem durch Stromsteuerung der Ansprechdruck eingestellt wird, entweder auf konstante oder anwendungsabhängig veränderbare Werte.

## Patentansprüche

1. Elektromagnetisch betätigtes Ventil (10), insbesondere für hydraulische Bremsanlagen in Kraftfahrzeugen,
mit den folgenden Merkmalen:
- es ist ein Sitzventil (41) zwischen einem Druckmitteleinlaß (26) und einem Druckmittelauslaß (33) vorgesehen,
- das Sitzventil (41) hat einen hohlkegelförmigen Ventilsitz (28) und ein Schließglied (37) in der Form eines Kugelsegments,
- in den Ventilsitz (28) mündet zentrisch eine mit dem Druckmitteleinlaß (26) in Verbindung stehende Zuströmbohrung (29),
- das Schließglied (37) ist mit scharfkantigem Übergang an der Stirnseite eines zylindrischen Abschnitts (38) eines Stößels (20) ausgebildet,
- am Stößel (20) greifen ein schließend auf das Sitzventil (41) wirkender Magnetanker (19) und eine öffnend wirkende Rückstellfeder (23) an, **gekennzeichnet durch** die weiteren Merkmale:
- der Dichtdurchmesser (D₂) des Ventilsitzes (28) ist gleich oder geringfügig größer als der Durchmesser (D₁) der Zuströmbohrung (29),
- der Kegelwinkel (α) des Ventilsitzes (28) beträgt höchstens 90°,
- der Magnetkreis des Ventils (10) ist derart ausgebildet, daß die auf den Magnetanker (19) ausgeübte, auf das Schließglied (37) übertragene Magnetkraft stufenlos veränderbar ist, wobei deren Verlauf mit zunehmendem Ventilöffnungshub (H) monoton abfällt,
- die vom Druckmittel und der Rückstellfeder (23) herrührende Kraft (Fₚ+F_{F}) am Schließglied (37) ist derart abgestimmt, daß sie einen mit zunehmendem Ventilöffnungshub (H) monoton fallenden Verlauf aufweist, dessen negative Steigung betragsmäßig größer ist als diejenige des Magnetkraftverlaufs.

2. Ventil nach Anspruch 1, **dadurch gekennzeichnet, daß** der Durchmesser (D₃) des Stößelabschnitts (38) wenigstens annähernd dem Dichtdurchmesser (D₂) des Ventilsitzes (28) entspricht.

3. Ventil nach Anspruch 1, **dadurch gekennzeichnet, daß** der Ventilsitz (28) in einem wenigstens dem Zweifachen des Dichtdurchmessers (D₂) des Ventilsitzes entsprechenden Durchmesser (D₄) scharfkantig frei ausläuft.

4. Ventil nach Anspruch 1, **dadurch gekennzeichnet, daß** der Stößelabschnitt (38) nach einer wenigstens dem Dichtdurchmesser (D₂) des Ventilsitzes (28) entsprechenden Länge (L) an einem Übergangsabschnitt (39) mit dem Ventilsitz entsprechender Konizität endet.

5. Ventil nach Anspruch 1, **dadurch gekennzeichnet, daß** der Stößel (20) eine aufgepreßte Hülse (21) trägt, welche eine Stützfläche (24) für die Rückstellfeder (23) aufweist.

## Claims

1. Electromagnetically actuated valve (10), in particular for hydraulic brake systems in motor vehicles, having the following features:
- a seat valve (41) is provided between a pressure-medium inlet (26) and a pressure-medium outlet (33),
- the seat valve (41) has a hollow-conical valve seat (28) and a closing member (37) in the form of a spherical segment,
- an inflow bore (29) connected to the pressure-medium inlet (26) issues centrally into the valve seat (28),
- the closing member (37) is produced by means of a sharp-edged transition on the end face of a cylindrical portion (38) of a tappet (20),
- a magnet armature (19) exerting a closing action on the seat valve (41) and a return spring (23) exerting an opening action engage on the tappet (20),
**characterized by** the further features:
- the sealing diameter (D₂) of the valve seat (28) is equal to or slightly larger than the diameter (D₁) of the inflow bore (29),
- the cone angle (α) of the valve seat (28) is at most 90°,
- the magnetic circuit of the valve (10) is designed in such a way that the magnetic force exerted on the magnet armature (19) and transmitted to the closing member (37) is continuously variable, its profile falling monotonically with an increasing valve opening stroke (H),
- the force (Fₚ+F_{F}) on the closing member (37) which originates from the pressure medium and the return spring (23) is co-ordinated in such a way that it has a profile which falls monotonically with an increasing valve opening stroke (H) and the negative gradient of which is of greater amount than that of the profile of the magnetic force.

2. Valve according to Claim 1, **characterized in that** the diameter (D₃) of the tappet portion (38) corresponds at least approximately to the sealing diameter (D₂) of the valve seat (28).

3. Valve according to Claim 1, **characterized in that** the valve seat (28) runs out freely, sharp-edged, in a diameter (D₄) corresponding at least to double the sealing diameter (D₂) of the valve seat.

4. Valve according to Claim 1, **characterized in that** the tappet portion (38), after a length (L) corresponding at least to the sealing diameter (D₂) of the valve seat (28), ends at a transitional portion (39) having a conicity corresponding to that of the valve seat.

5. Valve according to Claim 1, **characterized in that** the tappet (20) carries a pressed-on sleeve (21) which has a supporting surface (24) for the return spring (23).

## Revendications

1. Soupape (10) à commande électromagnétique, en particulier pour des systèmes de freinage hydrauliques pour des véhicules à moteur, avec les caractéristiques suivantes :
- on prévoit une soupape à siège (41) entre une entrée du milieu de pression (26) et une sortie du milieu de pression (33),
- la soupape à siège (41) a un siège de soupape (28) en cône creux et un organe de fermeture (37) sous forme d'un segment sphérique,
- un alésage d'alimentation (29) en liaison avec l'entrée du milieu de pression (26) débouche centralement dans le siège de soupape (28),
- l'organe de fermeture (37) est conçu avec une transition à arête vive sur le côté frontal d'un tronçon (38) cylindrique d'un poussoir (20),
- un rotor de magnéto (19) qui agit en fermeture sur la soupape à siège (41) et un ressort de rappel (23) qui agit en ouverture s'appliquent sur le poussoir (20),
**caractérisée par**
les spécifications suivantes :
- le diamètre jointif (D₂) du siège de soupape (28) est égal ou légèrement supérieur au diamètre (D₁) de l'alésage d'alimentation (29),
- l'angle de cône (a) du siège de soupape (28) a 90° au maximum,
- le circuit magnétique de la soupape (10) est formé de telle manière qu'on peut modifier en continu la force magnétique exercée sur l'induit magnétique (19) et transmise à l'organe de fermeture (37), son gradient baissant de manière monotone à mesure que la course d'ouverture de la soupape (H) augmente,
- la force (F_{P} + F_{F}) provenant du milieu de pression et du ressort de rappel (23) sur l'organe de fermeture (37) est déterminée de telle manière qu'elle présente un gradient qui baisse de manière monotone à mesure que la course d'ouverture de la soupape (H) augmente et dont la pente négative est plus grande quant à sa valeur que celle du gradient de la force magnétique.

2. Soupape selon la revendication 1,
**caractérisée en ce que**
le diamètre (D₃) du tronçon de poussoir (38) correspond au moins approximativement au diamètre jointif (D₂) du siège de soupape (28).

3. Soupape selon la revendication 1,
**caractérisée en ce que**
le siège de soupape (28) ressort librement en présentant une arête vive selon un diamètre (D₄) qui correspond au moins au double du diamètre jointif (D₂) du siège de soupape.

4. Soupape selon la revendication 1,
**caractérisée en ce qu'**
après une longueur (L) qui correspond au moins au diamètre jointif (D₂) du siège de soupape (28), le tronçon de poussoir (38) se termine sur un tronçon de transition (39) avec une conicité qui correspond au siège de soupape.

5. Soupape selon la revendication 1,
**caractérisée en ce que**
le poussoir (20) porte un manchon (21) engagé par pression et qui présente une surface d'appui (24) pour le ressort de rappel (23).
